# EUROPEAN PATENT APPLICATION

(11) **EP 3 954 258 A1**
(43) Date of publication of application: **16.02.2022**
(21) Application number: 20190737.5
(22) Date of filing: 12.08.2020
(51) Int. Cl.: A47J 31/42, A47J 31/58, A47J 42/56

(54) **AUTOMATIC COFFEE MACHINE HAVING A GRINDER WITH A SAFETY ELEMENT**

(71) Applicant: BSH Hausgeräte GmbH, 81739 München (DE)
(72) Inventor: Studencnik, Simon, 2390 Ravne na Koroskem (SI)

(57) **Abstract**

An automatic coffee machine having a grinder with a ground coffee outlet which is provided with a safety element whereby the safety element has side walls and a front wall comprising ribs and openings that form a sieve-kind structure.

The present invention enables an automatic coffee machine having a grinder with a safety element of an improved construction which provides the protection of the coffee machine users against injury on the one hand and ensures the permeability of said element on the other hand. The safety element is a simple and durable element which can be easily mounted and demounted on the ground coffee outlet.

## Description

The invention relates to a fully automatic coffee machine having a grinder for grinding coffee beans and a ground coffee outlet through which a ground coffee pass to the brewing chamber and the coffee outlet is provided with a safety element which protects the user from harm.

The fully automatic coffee machines with grinders are well known from the state of the art. The safety elements of the movable parts of the coffee machines are also known from the state of the art. The purpose of using the safety means is the user protection. Safety of use is the most important aspect of releasing the product on the market.

Preferably, the automatic coffee machines are equipped with burr grinders which crushes the coffee beans and provides a good quality of the grinding coffee powder. It is generally known that the optimal taste of coffee is achieved also when the time between grinding and brewing is the shortest possible. For this reason fully automatic coffee machines are provided with a hopper for roasted coffee grains. The consumer can set out the desired degree of grinding and dosage of the drink. The ground coffee is transferred by the grinding coffee outlet to the brewing unit where is pressed and poured with boiling water. The finished drink is poured into the cup through the coffee outlet. The main advantage of automatic coffee machines is the ability to brew freshly ground coffee with minimal user intervention in the preparation process.

The patent application WO 2015/ 078 662 A1 discloses a grinder for an automatic coffee machine comprising an internal grinder and an external grinder separated by a gap, a hopper equipped with an opening for unloading the coffee beans in the gap in order to perform the grinding, a finger guard impeller positioned at said unloading opening and having organs for moving the coffee beans and interception means of the impeller configured and arranged to limit its angle of rotation.

The patent application WO 2018/ 007 180 A1 discloses a coffee machine, in particular an automatic coffee machine, having a coffee mill for grinding coffee beans into ground coffee, and having a brewing unit, which comprises a brewing chamber and by means of which a coffee beverage is brewed by using water to leach out the ground coffee produced by means of the coffee mill. The invention provides for a stowage device to be arranged between the coffee mill and the brewing chamber, said stowage device comprising a stowage element which can be adjusted by means of an in particular electromotive drive, which can be activated via a control unit, between a stowage position, in which ground coffee is stowed in a stowage space before being discharged into the brewing chamber, and a release position, in which the stowed ground coffee is discharged into the brewing chamber.

The patent application DE 10 2016 203 811 A1 discloses a coffee machine comprising a grinder which in turn comprises a rotating grinding disc and a fixed grinding disc separated by an intermediate space, a hopper having an opening for emptying the coffee beans into this intermediate space and an oscillating finger protection device mounted inside the hopper in a position to protect the discharge opening wherein magnetic means are also provided to convert the rotation of the rotating grinding disc into the oscillation of the finger protection device.

The patent EP 2 130 465 B1 discloses a coffee maker with a bean container comprising a delivery opening for coffee beans which reach into a transportation shaft with a transportation screw and a crushing mill during operation. A safety element in an area of the delivery opening forms a gap in the bean container to control direct engagement into the delivery opening. The safety element is mounted in the area of the delivery opening on the transportation screw and/or an axle of the crushing mill. The safety element is arranged with the transportation screw and the crushing mill in a rotatable manner.

It is the object of the present invention to provide a fully automatic coffee machine with a grinder in which the risk of injury of the user during use is eliminated. It is also the object of the present invention to provide a safety element of the coffee outlet with a construction which prevents safety element plugging by the ground coffee particles.

This object is solved by an automatic coffee machine having a grinder with a safety element whereby the safety element has side walls and a front wall comprising ribs and openings that form a sieve-kind structure. The grinder is an internal device of the coffee machine which is permanently integrated in the coffee machine. After grinding, the brewing process starts automatically and settings for grinding quantity and quality can be set out through the coffee machine display.

The grinder comprises two flat or conical shape burrs with serrations which rotate in the opposite directions crushing the coffee beans which drops between the serrated sides of the burrs. The serrated sides of the rings are facing each other. After the grinding process, the coffee beans fall down into the ground coffee outlet and enter the brewing chamber in order to be infused with warm water. The ground coffee outlet is a simple channel through which the ground coffee beans leaves the grinder area. At the end of the ground coffee outlet a safety element is provided. The safety element has ribs and openings that form a sieve-kind structure. The ribs and holes dimensions are set out in such a way to prevents the users finger to reach the grinder. The positive effect is that the user is protected against unintentional harm. On the other hand, the size of the ribs and openings enables the ground coffee to easily get out the ground coffee outlet. The other positive aspect is a great durability and a simple construction of the safety element.

In a preferred embodiment of the invention the safety element is made of metal. The reason to provide a safety element which is made of metal is that the metal ribs are more durable than the plastic ones and can therefore be much thinner but still very robust which is also beneficial from the point of no clogging of the safety element.

In a preferred embodiment of the invention at least one dimension of the opening is less than 10 mm, preferably less than 8,5 mm. The dimension of the openings are set out in such a way to provide an effective barrier for the user finger, not only an adult but also a child finger. The positive effect is that the protection of the user is acquired in a simple and effective manner.

In another embodiment of the invention the safety element has holes which snap with protrusions of the ground coffee outlet. The safety element has two side walls. On each of the side wall a hole is placed. The ground coffee outlet has two protrusions which engages with holes of the safety element. In other words, the safety element is mounted on the ground coffee outlet thanks to the holes and protrusions. The safety element can be easily demounted in order to be cleaned. The positive effect is that the safety element can be assembled and disassembled in a fast, simple and intuitive manner.

In a preferred embodiment of the invention the safety element is fixed to the coffee outlet. As the geometry of the safety element is designed in a way that ensures the permeability of said element constantly it is advantageous that said element is fixed to the ground coffee outlet. It means that the safety element is attached to the ground coffee outlet without the possibility to disassembling. The positive effect is that the security of the coffee machine use is safer than in case of removable safety element.

The present invention enables an automatic coffee machine having a grinder with a safety element of an improved construction which provides the protection of the coffee machine users against injury on the one hand and ensures the permeability of said element on the other hand. The safety element is a simple and durable element which can be easily mounted and demounted on the ground coffee outlet.

The construction of the invention, however, together with additional objects and corresponding advantages will be best understood from the following description of specific embodiments and in connection with the accompanying drawing.

In the drawing:
- Fig. 1: shows an automatic coffee machine isometric view,
- Fig. 2: shows the coffee machine grinder with a ground coffee outlet and a safety element isometric view
- Fig. 3: shows the safety element isometric view.

In cooperation with attached drawing, the technical content and detailed description of the present invention are describes thereinafter according to a preferable embodiment, being not used to limit its executing scope. Any equivalent variation and modification made according to append claims is all covered by the claims claimed by the present invention.

In the following description of the preferred embodiments of the present invention, similar identical reference numbers designate identical or comparable components.

The automatic coffee machine comprises a grinder with a safety element. The coffee grinder grinds the coffee beans and the coffee powder is transmitted to the brewing chamber through the ground coffee outlet. The brewing process is performed in the brewing chamber and the beverage get out the coffee machine through the coffee spout directly to the cup.

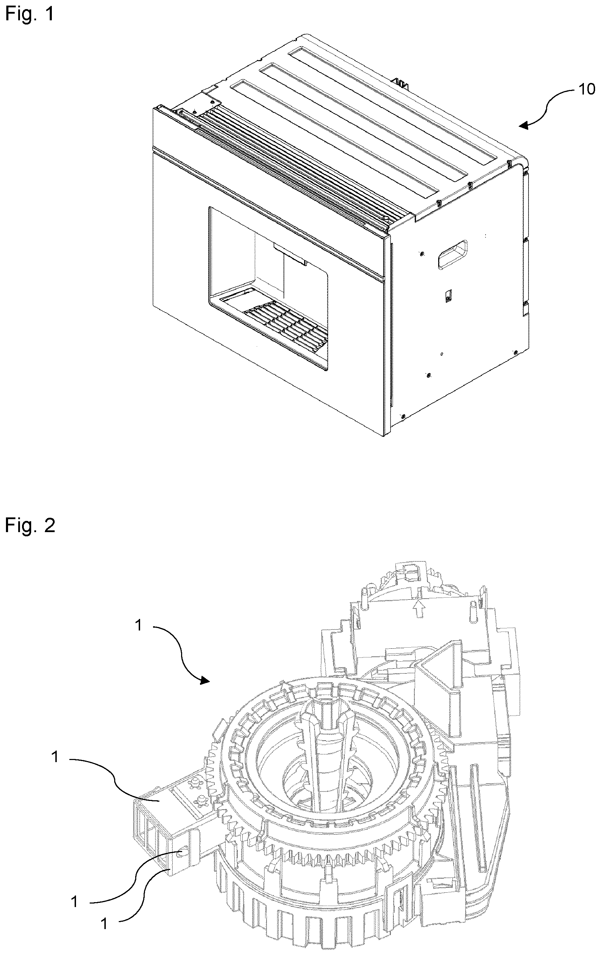

Fig. 1 shows an isometric view of an automatic coffee machine 10. The coffee machine 10 is provided with a grinder 11. The coffee machine 10 is equipped also with other standard elements like a water tank, a coffee outlet, a drip tray and internal parts like a brewing unit, pumps, valves (not shown on the figure).

Fig. 2 shows the coffee machine grinder 11 with a ground coffee outlet 16 and a safety element 12 in isometric view. The grinder 11 comprises elements which are dangerous during operation. The grinding elements has serrated sides which are directed towards each other and grind the coffee beans which falls between the grinding elements. After grinding the coffee powder is directed through the ground coffee outlet to the brewing chamber (not shown on the figure) where the brewing process is performed.

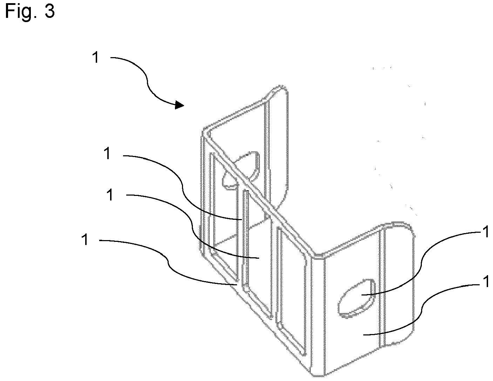

Fig. 3 shows the safety element 12 isometric view. To protect the user from harm the safety element 12 is provided at the end of the ground coffee outlet 16. Ground coffee outlet 16 is a channel through which coffee powder is carried from the grinder 11 to the brewing unit (not shown on the figure). The safety element 12 is a small c-shaped part consisting of two side walls 18 and the front wall 19. The front wall 19 has two of ribs 13 and three openings 14 which create a sieve-like structure. The distance between ribs 13 is about 8 mm in order to prevent the users finger to reach the grinder 11 through the ground coffee outlet 16.

The present invention enables an automatic coffee machine having a grinder with a safety element of an improved construction which provides the protection of the coffee machine users against injury on the one hand and ensures the permeability of said element on the other hand. The safety element is a simple and durable element which can be easily mounted and demounted on the ground coffee outlet.

### LIST OF REFERENCE SIGNS

- 10: coffee machine
- 11: grinder
- 12: safety element
- 13: rib
- 14: opening
- 15: hole
- 16: ground coffee outlet
- 17: protrusion
- 18: side wall
- 19: front wall

## Claims

1. An automatic coffee machine (10) having a grinder (11) with a ground coffee outlet (16) which is provided with a safety element (12), **characterized in that** the safety element (12) has side walls (18) and a front wall (19) comprising ribs (13) and openings (14) that form a sieve-kind structure.

2. The automatic coffee machine (10) according to claim 1, **characterized in that** the safety element (12) is made of metal.

3. The automatic coffee machine (10) according to any of the preceding claims, **characterized in that** at least one dimension of the opening (14) is less than 10 mm, preferably less than 8,5 mm.

4. The automatic coffee machine (10) according to any of the preceding claims, **characterized in that** each side wall (18) of the safety element (12) has a hole (15) which snap with protrusion (17) of the ground coffee outlet (16).

5. The automatic coffee machine (10) according to any of the preceding claims 1 to 3, **characterized in that** the safety element (12) is fixed to the coffee outlet (16).
